# EUROPEAN PATENT APPLICATION

(11) **EP 1 947 052 A2**
(43) Date of publication of application: **23.07.2008**
(21) Application number: 08445001.4
(22) Date of filing: 02.01.2008
(51) Int. Cl.: B66F 3/28

(54) **Arrangement at telescopic lifting beams**

(30) Priority: 19.01.2007 SE 0700121
(71) Applicant: Liko Research & Development AB, 975 92 Lulea (SE)
(72) Inventor: Liljedahl, Gunnar, 975 93 Lulea (SE)
(74) Representative: Billberg, Hans

(57) **Abstract**

A lifting means includes at least two telescopically displaceable lifting beams (1, 2), of which one (2) is connected to a driving means (3) in order to displace the second lifting beam (1) to and fro within said first lifting beam. A casing (4) can be placed to surround both the lifting beams and rest against these and surrounds both the lifting beams an essential part when they are protruded. A pressure spring (5) is placed within the casing (4) in order to displace the casing (4) so it surrounds both the lifting arms (1, 2) when they are in the protruded position in relation to each other whereby the pressure spring rests against the end of the casing (4), which end surrounds the displaceable lifting arm (1). A support (6) for the second end of the pressure spring (5) is attached on the fixed lifting beam (2).

## Description

This invention relates to an arrangement at at least two telescopically protrudable lifting beams, of which one is connected to a driving means in order to displace the second beam to-and-fro in said first beam, whereby a casing can be brought to surround both beams resting on them and extending a long part of the beams.

Lifting beams of this type are used, e.g. within the medical service for lifting means, when a person is being lifted from a sitting position to a standing position or from one place to another. Telescopic lifting beams of this kind are also used for other lifting purposes for patients.

The lifting beams are normally loaded in their longitudinal direction and they are designed to meet such a load. The lifting beams can be driven hydraulically via gears or manually using rope-driving means or with the help of a crank means.

It has now shown, e.g. within the medical service, that the lifting beams unintentionally have been loaded by bending when the telescopic beams are in their protruded position in relation to each other, which have lead to that the outer lifting beam has been bent in the area where it protrudes out of the outer end of the first lifting beam. The object of the invention is to increase the strength of the lifting beams when they are in their protruded position and that this is accomplished by simple means, which are cheap. SE 516855 discloses such a solution consisting of a casing, which can be displaced on the beams so it covers e.g. half of the fixed beam and the first half of the protrudable beam so that the casing also takes up the bending stresses.

The object of the invention is to simplify the design of the means, which perform the displacement of the casing when the movable beam is protruded for carrying out its lifting movement. The characteristics of the invention are stated in the following claim 1.

An embodiment of the invention will now be described by reference to the drawings.

Fig. 1 is hereby a partly longitudinal cross section of the lifting arrangement, having both lifting arms in retracted position.

Fig. 2 is a partly longitudinal cross section as in fig. 1, but the movable lifting arms are in protruded position.

Fig. 3 is an enlarged cross section at the position a in fig. 1.

Fig. 4 is an enlarged part of the cross section at position B in fig. 2.

Fig. 5 is a part of an enlarged cross section at position C in fig. 2.

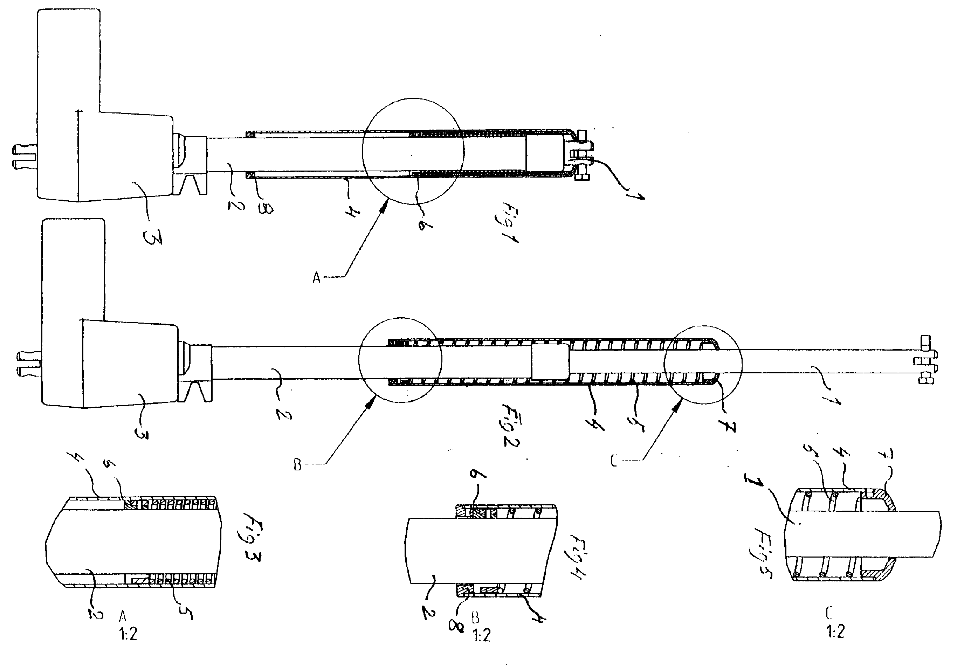

The arrangement shown in fig. 1 and 2 comprises a lifting beam 1, which is telescoping in a second lifting beam 2, being fixed to a driving means 3 which displaces the first lifting beam 1. The driving means 3 can be any known engine as e.g. an hydraulic engine or a gear motor, which drives the lifting beam 1 telescoping in the lifting beam 2. The lifting beams are loaded when the lifting beam 1 is protruding out of the lifting beam 2 in the position shown in fig. 2. As can be seen from fig. 2, the lifting beams 1 and 2 are surrounded by a telescopic pipe or casing 4, which is displaceable over the two lifting beams 1 and 2. Fig. 1 shows the position of the lifting beams in which the telescopic casing 4 is completely displaced downwards over the fixed lifting beam 2. Fig. 2 shows the telescopic casing 4 being placed over the half length of the lifting beam 1 and over the half length of the lifting beam 2.

The displacement of the telescopic casing 4 from the position shown in fig. 1 to the position shown in fig. 2 is performed by a pressure spring 5 which is located within the lifting beam 2. The telescopic casing 4 can also be said to be a case or casing. The end of the pressure spring 5 which faces the driving means 3 rests on a support 6 which is attached about on the middle of the lifting arm 2. The second end of the pressure spring 3 is supported by a cover 7 on the upper end of the telescoping casing 4. When the driving means 3 displaces the lifting beam 1 telescopically out of the lifting beam 2, the pressure spring 5 will press the casing 4 upwards to the position shown in fig. 2. The power of the pressure spring 5 can be so adapted that the casing 4 will cover as much of the lifting beam 1 as of the lifting beam 2 when the lifting beam 1 is in its most protruded position. However, it can alternatively be so arranged that the casing 4 in its lower end, that is to say the end which is closest to the lifting means, is a ring 8 which will rest against the support 6 when the casing 4 is in the position shown in fig. 2 by being displaced by the pressure spring 5. The length of the casing 4 shall advisably be half of the lifting beam 1 plus half of the lifting beam 2 as shown in fig. 2. The ring 8 also acts as a support between the casing 4 and the lifting arm 2, and the cover 7 on the casing 4 is designed to act in the same way in relation to the lifting beam 1. In the position of the lifting beams shown in fig. 2, the casing 4 will take up bending forces on the lifting beams specifically within the area where the lifting beam 2 is telescopically protruded out of the lifting beam 2.

Fig. 3 shows a part of a longitudinal cross section at the area A in fig. 1. This figure shows the support 6 which is attached to the casing against which the lower end of the pressure spring is resting.

Fig. 4 shows a longitudinal cross section of the lower part of the casing in the position B in fig. 2. In this position the casing has been displaced by the pressure spring 5 so far as possible by that the pressure spring 5 has carried out a pressure between the support 6 and the cover 7 of the casing 4. Also, the support ring 8 is shown, which forms a support between the lifting beam 2 and the casing 4. The ring may also form a limitation for how far the casing 4 can be displaced upwards on the lifting beam 2 by that the support 6 will come to rest on the ring 8. The support 6 is thus firmly attached to the inner side of the casing 4.

Fig. 5 shows a longitudinal cross section of the upper part of the casing 4 at a position C in fig. 2. It is hereby seen that the pressure spring 5 rests on the cover 7 attached at the upper end of the casing 4.

There are alternative solutions within the scope of the invention as for instance the design of the supports, the design of the cover and also the design of the support ring. The support ring may be omitted by that the outer dimension of the lifting arm 2 is adapted to the inner dimension of the casing in an area below the pressure spring 5, that is to say in the area B according to fig. 2. The upper end of the casing can be designed in another way and have a design similar to a ring instead of a cover. It should also be noted that in the foregoing disclosure two lifting beams have been described but the inventive idea also includes several lifting beams arranged one after the other.

## Claims

1. Arrangement at a lifting means consisting of at least two telescopically displaceable lifting arms, of which one is connected to a driving means in order to displace the second lifting beam to and fro within the first lifting beam, whereby a casing can be brought to surround both the lifting beams and being extended a certain distance over both the lifting beams in their protruded position, **characterized in that** a pressure spring (5) is situated within the casing (4) and rests against the casing (4) at the end, which surrounds the displaceable lifting arm (1) and that a support (6) is attached on the fixed lifting arm (2) for supporting the second end of the pressure spring, which support (6) has a distance from the end of the lifting beam (2), which distance corresponds to about half of the length of the casing (4).

2. Arrangement according to claim 1, **characterized in that** the end of the casing (4) which faces the driving means (3), includes a ring (8), which slides against the outside of the lifting beam (2) and that a corresponding support (7) is arranged at the second end of the casing and forms the support for the end of the pressure spring (5).

3. Arrangement according to claim 2, **characterized in that** the support (7) at the second end of the casing is in the form of a cover (7).
